# EUROPEAN PATENT APPLICATION

(11) **EP 1 332 749 A2**
(43) Date of publication of application: **06.08.2003**
(21) Application number: 03002033.3
(22) Date of filing: 28.01.2003
(51) Int. Cl.: A61J 7/00

(54) **Medicament applicator or dispenser**

(30) Priority: 04.02.2002 US 66853
(71) Applicant: CENTRIX, INC., Shelton, CT 06484-5458 (US)
(72) Inventor: Klein, Leif, Madison, Connecticut 06443 (US); Rowe, Gordon, Wallingford, Connecticut 06492 (US); Dragan, William B., Easton, Connecticut 06612 (US)
(74) Representative: Grünecker, Kinkeldey, Stockmair & Schwanhäusser Anwaltssozietät

(57) **Abstract**

A medicament applicator having a stick handle and a connected applicating end portion in the shape of a pleasing and amusing character that is well known to a child. In one form of the invention, the applicating end is formed of a cellular material, e.g. a sponge or foam capable of releasably retaining in the pores or cells thereon a medicament to be administered. In another form, the applicating end may be formed of a confectionary material having mixed therein a medicament which is administered to the child as the child sucks thereon. A package having one or more wells is provided to store and/or ship such applicators and/or medicament until readied for use.

## Description

### FIELD OF THE INVENTION

This invention is directed to a medicament applicator or dispenser for medicating small children.

### BACKGROUND OF THE INVENTION

Heretofore, parents, dentists, doctors and/or caregivers frequently encountered extreme difficulty in administering various types of medicines and/or dental medicaments to infants and small children. Generally, such infants and small children are reluctant to being medicated and frequently throw tantrums to resist such efforts. The end result is that the child acquires an extreme distaste toward taking medicaments, which is not only harmful to the child but extremely frustrating for the parent or caregiver. Such resistance to being medicated results in a child not being properly medicated, as little, if any, medicament can be administered during such resistance.

In an effort to fool a child, parents and/or the caregiver frequently seeks to camouflage the medicament by serving it mixed in milk, juice or other food product with which the child is familiar. However, a child can easily sense this subterfuge and continue his or her resistance in the taking of such medicament, so mixed or camouflaged.

### SUMMARY OF THE INVENTION

An object of this invention is to provide a device for administering various medicaments to small children in a manner that renders it enjoyable to the child.

Another object is to provide a medicament applicator in the shape of a lollipop constructed in the form of an animated character or amusing shape with which a small child is familiar.

Another object is to provide a device constructed in a shape familiar to the small child which is formed of a gel or sugar based confectionary mixed with the prescribed dose of a medicament.

Another object is to provide a medicament dispensing device that reduces a child's fear or stress when administering a medication to a child.

Another object is to provide a pleasing medicament applicator and package therefor.

Another object is to provide a medicament applicator and package therefor containing a supply of the medicament to be administered.

The foregoing objects and other features and advantages are attained by a medicament applicator or dispenser that includes a stick handle having connected at one end thereof a piece of sponge or foam formed in the shape of an animated character such as a teddy bear, duck, dog, cat or other child-pleasing shape which is impregnated with a predetermined dose of a medicament to be administered to the child. The medicament may include a topical anesthetic to relieve the pain of teething in a small child, or such other kind of medicament that is required to be frequently administered to a small child to relieve various symptoms of childhood types of illness and/or discomfort.

In another form of this invention, the prescribed medicament may be mixed in a candy gel or sugar based confectionery, molded in the shape of an animated character or other pleasing shape familiar to children, wherein such sugar based confectionery, with the medicament mixed therein, is attached to a stick to simulate a candy lollipop.

This invention further contemplates a package for containing a determined dose of a given medicament and to protect the medicament applicator and medicament from airborne contaminates until the applicator is readied for use. In one form of the invention, the package includes a tray having a material well for containing a predetermined supply of a medicament and an applicator well which may be shaped to accommodate the animated form or shape of the applicating end of an applicator. The applicator well is also provided with an opening through which the stick or handle of the applicator may extend. A cover overlies the material well and applicator well to protect the contents thereof until the applicator is readied for use.

In another form, the package comprises a tray having an applicator well shaped for receiving the applicating end of the applicator and which is provided with an end opening through which the stick or handle portion of the applicator is extended. A cover secured to the top of the tray protects the applicating end of the applicator from any airborne contaminates.

### IN THE DRAWINGS

Fig. 1 is a perspective view of a medicament applicator or dispenser embodying the invention.
Fig. 2 is a side view of Fig. 1.
Fig. 3 is an end view of Fig. 1.
Fig. 4 illustrates a manner of applying a medicament to the applicator of Fig. 1.
Fig. 5 is a side view of a modified form of the invention having portions shown in section.
Fig. 6 is an end view of Fig. 5.
Fig. 7 is an exploded perspective view of the applicator of Fig. 1 and package therefor.
Fig. 8 is a longitudinal side sectional view of the package and applicator of Fig. 7.
Fig. 9 is a plan view of a series of connected packages of Figs. 7 and 8.
Fig. 10 is an exploded perspective view of a modified package and applicator therefor.
Fig. 11 is a plan view of a series of connector package combination of Fig. 10.

### DETAILED DESCRIPTION

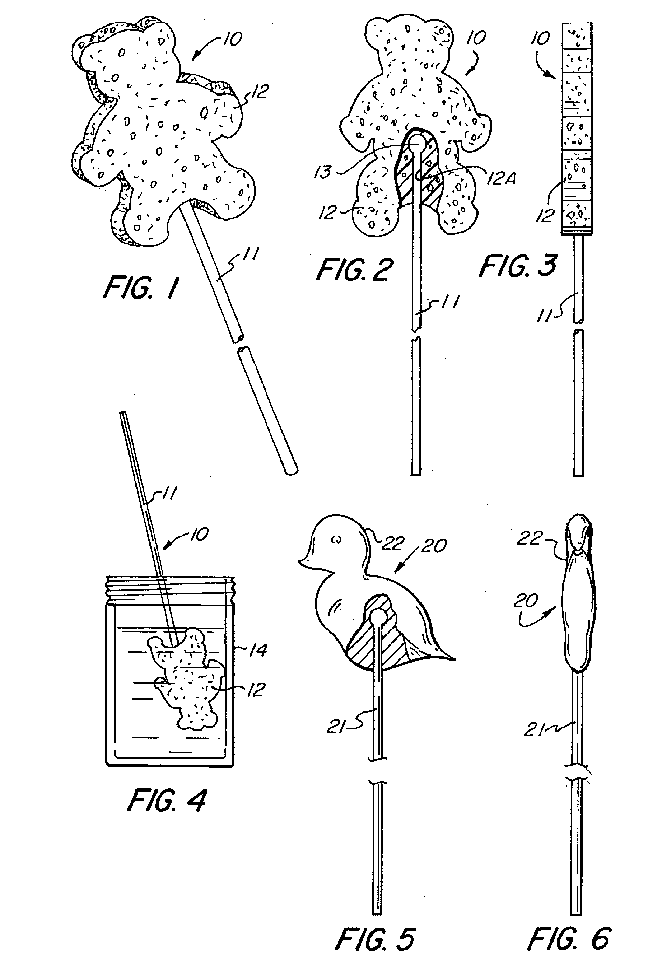

Referring to the drawings, there is shown in Figs. 1 and 2 a medicament device 10 embodying the present invention. The device 10 includes a stick handle 11 having connected to one end thereof an applicating end 12 formed of cellular, porous foam, or sponge having the shape of an animated character, e.g. a teddy bear, cat, dog, duck or such other shape which may be pleasing or familiar to a child. The foam or sponge applicating end 12 is suitably connected to the stick handle in a manner such as to prohibit any separation of the sponge or foam applicating end 12 from the stick handle 11. This can be attained by providing the end of the stick handle 11 to which the foam or sponge applicating end 12 is attached with a mounting portion 13 in the form of a small ball or other shape. The applicating end 12 is provided with a bore 12A to receive the stick handle by which the foam or sponge applicating end 12 may be secured either by a press or friction fit. Alternatively, the foam or sponge applicating end 12 may be secured to the stick handle 11 by suitable adhesive or by heat fusing the applicating end 12 to the stick handle 11.

The foam or sponge applicating end 12 may be pre-impregnated or saturated for a particular medicament, e.g. a topical anesthetic and packaged as hereinafter described. With such applicator, a parent or caregiver can readily relieve the child of any pain due to teething without any fear on the part of the child. Because the medicament applicator or device simulates a lollipop and/or a character familiar to the child, much of the fear or stress hereinbefore encountered in medicating a small child is obviated. With such a medicament applicator, a parent, doctor, dentist or caregiver can make it pleasurable for the child.

It will be understood that a medicament other than an anesthetic or desensitizing material may be impregnated or saturated in the foam or sponge applicating end 12. Where the medicament is a liquid, e.g. a cough syrup, it can be saturated in the sponge or foam so that the child can be medicated simply by sucking or licking the medicament out of the foam or sponge.

Fig. 4 illustrates an arrangement whereby a parent or caregiver may replenish the medicament after a child has sucked or absorbed all the medicament out of the applicating end 12. As shown in Fig. 4, the medicament, e.g. a cough syrup, which is usually packaged in a jar or bottle 14, may define the reservoir or supply. In such instance, the caregiver may simply dip the applicating end into the cough syrup to resupply the sponge applicator end with additional medicament. Because the medicament applicator has all of the appearances of a lollipop in the form which is pleasing to a small child, the child is not likely to resist or refuse being medicated.

Figs. 5 and 6 illustrate a modified form of the invention. In this form of the invention, the applicating end 20 connected to the stick handle 21 is formed of a gel or a sugar based confectionery such as candy, in which there is mixed a predetermined dose of a suitable medicament. In this form of the invention, the child is medicated as it sucks on or chews on the applicator 20 As shown in Figs. 5 and 6, the applicator end 20 is in the form of a suitable character, e.g. a duck, which is pleasing to a child. Thus, the applicators described make the taking of medication a treat instead of a troublesome treatment. Further, the use of the described dispensers insures that the child receives the entire prescribed dose without fear or stress.

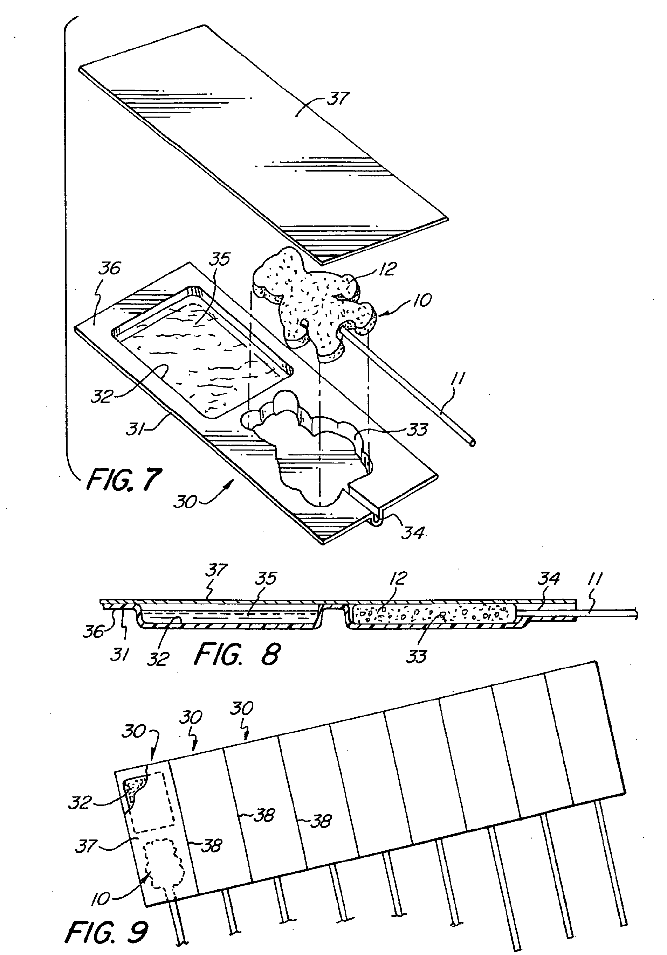

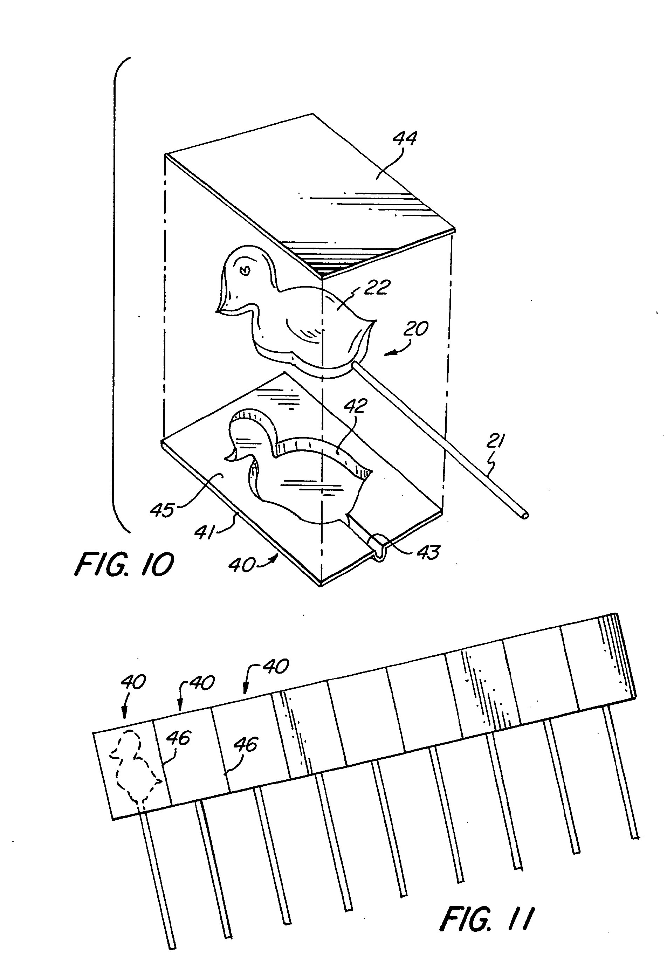

Figs. 7 to 9 illustrate a preferred package for protecting the applicator 10 during storage and/or shipment, or until the applicator 10 is readied for use. As shown in Fig. 7, the package 30 includes a tray 31 formed of thin plastic or plastic film which is suitably formed to define a material well 32 and an applicator well 33 sized and shaped to accommodate the applicating end 12 of applicator 10. Adjacent to the applicator well 33 and in communication therewith is a channel 34 for accommodating the stick handle 11 which extends outwardly of the tray 31 when the applicator end 12 is seated in the applicator well 33. A supply of the medicament 35 is disposed in the medicament well 32. A suitable cover or plastic film 37 is adhesively secured to the planer peripheral portion 36 of the tray 31. In the completed package as shown in Figs. 8 and 9, the cover 37 protects both the medicament and applicating end 12 of the applicator from any airborne contaminates during storage and shipment. To use, the cover 37 is merely striped off the tray to expose the medicament and applicator. The applicator 10, upon removal from the applicator well, is then dipped into the medicament 35 whereupon it is absorbed by the sponge of the applicator end 12. The medicament saturated in the sponge applicating end 12 is then administered to the child as hereinbefore described. Fig. 9 illustrates a series of packages 30 connected or ganged together by a frangible or break-away connection 38, whereby a package 30 may be readily separated from the gang along the frangible connection 38.

Figs. 10 and 11 illustrate a modified package construction 40 to accommodate applicator 20 of Figs. 5 and 6. In this embodiment, the package 40 includes a tray 41 having a well 42 formed therein which is sized and shaped for accommodating or seating the applicating end 22 of applicator 20. The applicator well 42 is provided with an end opening or channel 43 for receiving or seating the stick handle 21 of applicator 20 when the applicating end 22 is seated in the applicator well 42. A thin film cover 44 is adhesively secured to the planer portion 45 of the tray so as to protect the applicating end 22 of applicator 20 within the applicator well 42. In Fig. 11, a series of packages 40 are connected side by side by means of a break-away or frangible connection 46, similar to that described with respect to Fig. 9.

From the foregoing, it will be apparent that the applicators described form a simple and easy way to insure that a small child can be medicated, as necessary, without the child being distressed and/or in fear. As described herein, the applicator 10 with the foam or sponge like applicating end 12 may be pre-impregnated with the medicament and packaged in a suitable package to prevent any evaporation of the medicament, so that it is made ready for use immediately upon the opening of the package. Alternatively, the applicator 10 can be marketed together with a specific medicament as described with respect to Figs. 7 to 9. The described package combination also provides for a simple and expedient means for protecting either the medicament and/or the applicator from contamination during storage and/or shipment.

While the present invention has been described with respect to a particular embodiment, various modifications and variations may be made without departing from the spirit or scope of this invention.

## Claims

1. A medicament dispensing device for medicating a small child comprising:
an applicator,
said applicator having a stick handle and a connected applicating end,
said applicating end being formed of a cellular material capable of being impregnated with a medicament to be dispensed,
said applicating end being formed in a shape pleasing to a small child,
and a medicament impregnated in said applicating end.

2. A medicament dispensing device as defined in Claim 1 and including:
means for securely connecting said applicating end to said stick handle at one end thereof.

3. A medicament dispenser as defined in Claim 1 wherein said applicating end is formed of a material selected from a group consisting of a sponge, sponge rubber, and foam that have cellular openings for releasably retaining a medicament therein.

4. A medicament dispenser as defined in Claim 1 wherein said applicating end is configured in the shape of an animated object which is amusing and pleasing to a small child.

5. A medicament dispenser for administering a medicament to a small child comprising:
an applicator,
said applicator including a stick handle and an applicating end connected to one end of said stick handle simulating a lollipop,
said applicating end having a configuration which is pleasing and amusing to a small child,
said applicating end containing a medicament therein whereby the medicament is administered to a small child as the child sucks on the applicating end.

6. A medicament dispenser as defined in Claim 5 wherein said applicating end is formed of a confectionary material,
said confectionary material being laced with a medicament to be administered to a small child.

7. A medicament dispenser as defined in Claim 5 wherein said applicating end is formed of a cellular material selected from a group consisting of a sponge and porous foam.

8. A medicament dispenser as defined in Claim 7 wherein said cellular material is pre-saturated with a predetermined amount of a medicament.

9. A medicament dispenser as defined in Claim 5 and including:
a tray having an applicator well,
an opening in communication with said applicator well adjacent one end of said tray,
said applicating end being disposed in said applicator well with said stick handle extending outwardly of said tray through said opening,
and a cover overlying said applicator well and secured to said tray to protect said applicating end from airborne contaminates.

10. A medicament dispenser for medicating a small child comprising:
an applicator,
said applicator having a stick handle,
said stick handle having a mounting portion at one end thereof,
an applicating end formed of a cellular material,
said applicating end being formed in an animated shape which is pleasing and amusing to a small child,
said applicating end having a bore adapted to receive said mounting portion at said one end of said stick handle whereby said applicating end is positively secured to said stick handle, and
a predetermined amount of a medicament saturating said applicating end.

11. A medicament dispenser as defined in Claim 10 wherein said mounting portion comprises a ball shaped protrusion for securing said applicating end to said stick handle.

12. A method of administering a medicament to a small child in a manner to minimize a child's apprehension and fear in being medicated comprising the steps of:
forming a dispenser in the form of a lollipop having a stick handle and a connected applicating end formed of a spongy material,
shaping said applicating end to form a character which is pleasing and amusing to a child,
impregnating said applicating end with a medicament,
and permitting a child to suck the medicament out of said spongy applicator end.
